# EUROPEAN PATENT APPLICATION

(11) **EP 1 403 781 A1**
(43) Date of publication of application: **31.03.2004**
(21) Application number: 03007812.5
(22) Date of filing: 04.04.2003
(51) Int. Cl.: G06F 17/30

(54) **Validation system and method**

(30) Priority: 27.09.2002 US 256791
(71) Applicant: Hewlett-Packard Development Company, L.P., Houston, TX 77070 (US)
(72) Inventor: Graves, David A., Monte Sereno, CA 95030 (US); Nair, Parvathi, Sunnyvale, CA 94086 (US); Bertsch, Margaret M., Nashville, TN 37212 (US)
(74) Representative: Schoppe, Fritz, Dipl.-Ing.

(57) **Abstract**

A validation system (10) comprises a memory (18) accessible by a processor (16) and having an extensible markup language (XML) data model (32) of a computer network (34) relating at least two objects corresponding to a set of syntax rules (42). The system (10) also comprises a set of semantic rules (44) accessible by the processor (16) and having semantic information expressed in XML format corresponding to the XML data model (32). The system (10) further comprises a validator (20) adapted to validate the XML data model (32) of the computer network (34) using the set of semantic rules (44).

## Description

### TECHNICAL FIELD OF THE INVENTION

The present invention relates generally to the field of computer systems and, more particularly, to a validation system and method.

### BACKGROUND OF THE INVENTION

Extensible markup language (XML) is a mechanism to identify objects in a document or file and/or relate objects within the document or file. For example, XML may be used to express mathematical equations, e-commerce transactions, object meta-data, server applications, and a variety of other types of structured information. Generally, XML provides a flexible architecture for representing objects in a notation that defines object types and hierarchical relationships of objects.

However, a particular XML file may contain a large number of objects and corresponding relationship and/or definition information associated with the objects. Thus, checking or verifying the XML data for correctness is generally time-consuming and labor-intensive. Additionally, if access to the program code is restricted, verification of the XML data may be impossible.

### SUMMARY OF THE INVENTION

In accordance with one embodiment of the present invention, a validation system comprises a memory accessible by a processor and having an extensible markup language (XML) data model of a computer model relating at least two objects corresponding to a set of syntax rules. The system also comprises a set of semantic rules accessible by the processor and having semantic information expressed in XML format corresponding to the XML data model. The system further comprises a validator adapted to validate the XML data model using the set of semantic rules.
In accordance with another embodiment of the present invention, a validation method comprises providing an extensible markup language (XML) data model of a computer model relating at least two objects corresponding to a set of syntax rules and applying a set of semantic rules to the data model to validate the relationship between the at least two objects.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a validation system in accordance with the present invention; and

FIGURE 2 is a flow chart illustrating an embodiment of a validation method in accordance with the present invention.

### DETAILED DESCRIPTION OF THE DRAWINGS

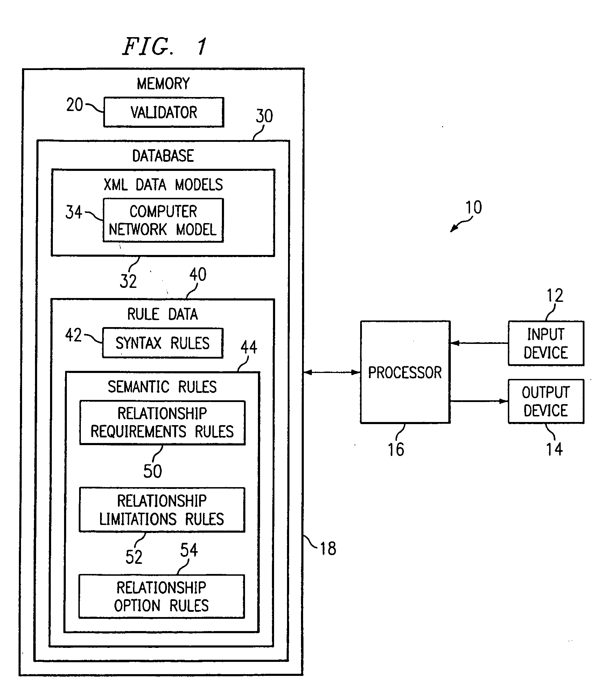

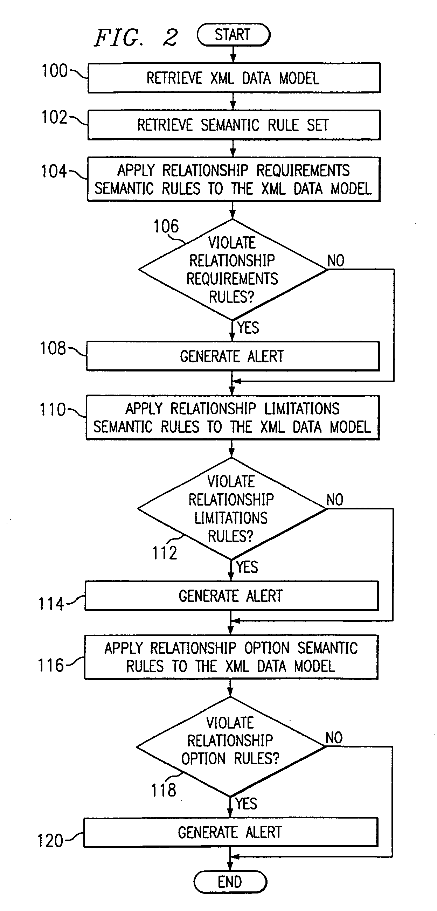

The preferred embodiments of the present invention and the advantages thereof are best understood by referring to FIGURES 1 and 2 of the drawings, like numerals being used for like and corresponding parts of the various drawings.

FIGURE 1 is a diagram illustrating an embodiment of a validation system 10 in accordance with the present invention. Briefly, validation system 10 validates an extensible markup language (XML) data model using semantics rules, thereby significantly reducing costs associated with programming and maintenance of the XML data model. For example, an XML data model generally defines the syntax for a relationship between various objects of the XML data model. In accordance with the present invention, a set of semantic rules are used to rapidly validate the XML data model on both a syntax and semantic level.

In the illustrated embodiment, validation system 10 comprises an input device 12, an output device 14, a processor 16, and a memory 18. Input device 12 may comprise a keyboard, keypad, pointing device, such as a mouse or a track pad, or other type of device for inputting information into validation system 10. Output device 14 may comprise a monitor, display, printer, or other type of device for generating an output.

The present invention also encompasses computer software that may be executed by processor 16. In the illustrated embodiment, memory 18 comprises a validator 20, which is a computer software program. However, it should be understood that system 10 and, specifically, validator 20, may be configured using hardware, software, or a combination of hardware and software components. In the embodiment of FIGURE 1, validator 20 is illustrated as being stored in memory 18, where it may be executed by processor 16. However, validator 20 may be otherwise stored, including remotely stored, as to be accessible by processor 16.

In the illustrated embodiment, validation system 10 also comprises a database 30 stored in memory 18. Database 30 comprises information associated with validating at least one extensible markup language (XML) data model 32. For example, in the illustrated embodiment, validation system 10 may be used to validate a computer network model 34 defining relationships for a computer network in an XML format. Thus, computer network model 34 may comprise information associated with the type, model, role, and connections of various network devices, such as, but not limited to, the source and destination connections associated with each network device. However, it should be understood that other types of devices or information may be expressed as an XML data model 32 such as, but not limited to, an integrated circuit architecture or name and address information stored in a database.

In the illustrated embodiment, validation system 10 also comprises rule data 40 stored in database 30. Rule data 40 comprises information associated with XML data models 32 for defining and validating the relationship between various objects within a particular model 32. For example, in this embodiment, rule data 40 comprises a set of syntax rules 42 and a set of semantic rules 44. Syntax rules 42 comprise information associated with elements identifying a particular object of a model 32 and attributes identifying name-value pairs associated with a particular element. An example of computer network model 34 in an XML format using syntax rules 42 is illustrated below:

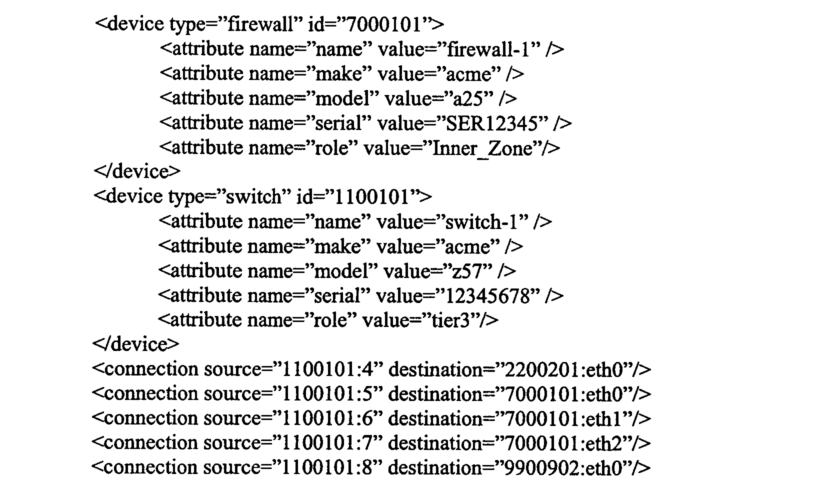

In the above network model 34 example, syntax rules 42 define elements and name-value pairs or attributes associated with the network elements. For example, in this embodiment, syntax rules 42 define a firewall as a network element including the make, model and serial number of the firewall. The syntax rules 42 also define the source-destination connections for the network.

Semantic rules 44 comprise information associated with the semantics corresponding to a particular data model 32. For example, in this embodiment, semantic rules 44 comprise relationship requirement rules 50, relationship limitation rules 52, and relationship option rules 54. Relationship requirement rules 50 comprise information associated with required relationships between two or more objects. For example, relationship requirement rules 50 may comprise information associated with required connections for a particular device or object. Relationship limitations rules 52 comprise information associated with relationship limitations corresponding to the model objects. For example, relationship limitations rules 52 may define a minimum and/or a maximum number of connections for a particular object of computer network model 34, or may define impermissible connections for a particular object of computer network model 34. Relationship option rules 54 comprise information associated with optional relationships between objects of a particular data model 32. For example, relationship option rules 54 may comprise information associated with optional or alternative types or formats of data communications between objects of computer network model 34. An example of semantic rules 44 expressed in XML format is provided below:

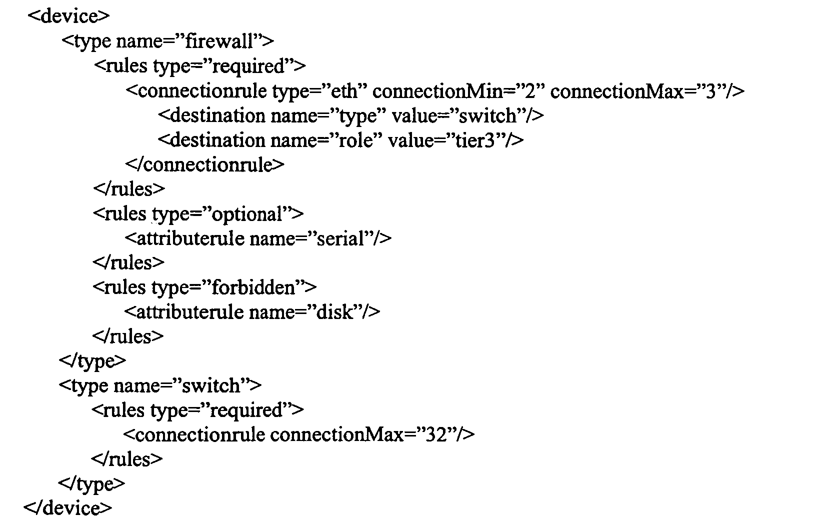

As illustrated in the above example of semantic rules 44, a particular semantic rule 44 may define an acceptable or required make and/or model for a firewall. Another semantic rule 44 may define a forbidden attribute in the context of a particular firewall. Additionally, semantic rules 44 may define specific connections for a particular type of object, thereby validating source and destination attributes of the model 32. For example, semantic rules 44 may comprise information associated with a connection requirement for a particular firewall, a minimum quantity of connections for a particular firewall, and/or a maximum quantity of connections for a particular firewall. Additionally, semantic rules 44 may define specific attributes of a required destination object. For example, in above example for a firewall, the only connections counted are those to destination devices with a type of "switch" and a role of "tier 3." In this example, relationships spanning two XML device declarations and three XML connection declarations can be validated.

In the above network model 34 example, relationship requirement rules 50 comprise information associated with required relationships between network devices or components, such as, but not limited to, device type, make, model, role, and connections for a network device. Relationship requirement rules 50 may also comprise information associated with required connections between network components such as, but not limited to, required connections for a particular firewall. Relationship requirement rules 50 may also comprise information associated with required data communication formats between network components.

Relationship limitations rules 52 for computer network model 34 may comprise information associated with relationship limitations between network devices or components. For example, relationship limitations rules 52 may comprise information associated with a minimum and/or maximum quantity of connections for one or more devices or components of network model 34 such as, but not limited to, a minimum and/or maximum quantity of connections to a particular firewall. Relationship limitations rules 52 may also comprise information associated with unacceptable or forbidden relationships between model 32 objects. For example, relationship limitations rules 52 may comprise information associated with unacceptable or forbidden connections between particular network components and/or unacceptable or forbidden formats of data communications between network devices.

Relationship option rules 54 comprise information associated with acceptable or optional relationships between model 32 objects. For example, for computer network model 34, relationship option rules 54 may comprise information associated with defining optional or acceptable network devices or components such as, but not limited to, an acceptable type, make, model, role, and connections for a network device. Relationship option rules 54 may also comprise information associated with acceptable or optional connections between network components such as, but not limited to, acceptable connections to a particular firewall. Relationship option rules 54 may also define acceptable data communication formats between network components.

Thus, the present invention provides an efficient system 10 for validating the correctness of XML data models 32 such as, but not limited to, computer network model 34. For example, computer networks are frequently large and complex and, therefore, generally difficult to verify or validate for correctness. Computer network model 34 may be used to represent the physical structure or other relationship information associated with a computer network in XML format. Thus, in accordance with an embodiment of the present invention, validator 20 verifies or validates the correctness of computer network model 34 using semantic rules 44.

FIGURE 2 is a flowchart illustrating an embodiment of a validation method in accordance with the present invention. The method begins at step 100, where validator 20 retrieves one of XML data models 32 from memory 18. For example, validator 20 may retrieve computer network model 34 from database 30. At step 102, validator 20 retrieves semantic rules 44 from database 30.

After step 102, validator 20 applies semantic rules 44 to the retrieved XML data model 32. For example, at step 104, validator 20 applies relationship requirement rules 50 to the retrieved XML data model 32. At decisional step 106, if the retrieved XML data model 32 violates any of the relationship requirements rules 50, the method proceeds to step 108, where validator 20 may generate an alarm or other alert to a user of system 10 notifying the user of a rule violation. If the retrieved XML data model 32 does not violate the relationship requirements rules 50, the method proceeds from step 106 to step 110.

At step 110, validator 20 applies relationship limitations rules 52 to the retrieved XML data model 32. At decisional step 112, a determination is made whether the retrieved XML data model 32 violates the relationship limitations rules 52. If the retrieved XML data model 32 violates any of the relationship limitations rules 52, the method proceeds from step 112 to step 114, where validator 20 generates an alert to a user of system 10 notifying the user of a rule violation. If the retrieved XML data model 32 does not violate the relationship limitations rules 52, the method proceeds from step 112 to step 116.

At step 116, validator 20 applies relationship option rules 54 to the retrieved XML data model 32. At decisional step 118, a determination is made whether the retrieved XML data model 32 violates any of the relationship option rules 54. If the retrieved XML data model 32 violates the relationship option rules 54, the method proceeds from step 118 to step 120, where validator 20 generates an alert to a user of system 10 notifying the user of a rule violation. If the retrieved XML data model 32 does not violate the relationship option rules 54, the method ends.

Thus, the present invention provides an efficient and cost-effective system and method for validating or verifying the correctness of XML data models 32 using a set of semantic rules 44 expressed in an XML format, thereby substantially reducing or eliminating the requirement of expressing the semantic requirements for the model 32 in programming code. Additionally, the semantic rules 44 may be easily enhanced without requiring access to the code of the data model 32 or additional programming to the data model 32.

## Claims

1. A validation system (10), comprising:
a memory (18) accessible by a processor (16) and having an extensible markup language (XML) data model (32) of a computer network (34), the XML data model (32) relating at least two objects of the computer network (34) corresponding to a set of syntax rules (42);
a set of semantic rules (44) accessible by the processor (16) and having semantic information expressed in XML format corresponding to the XML data model (32); and
a validator (20) adapted to validate the XML data model (32) of the computer network (34) using the set of semantic rules (44).

2. The system (10) of Claim 1, wherein the set of semantic rules (44) comprises information associated with a role of the object.

3. The system (10) of Claim 1, wherein the set of semantic rules (44) comprises information associated with relationship requirements of the objects.

4. The system (10) of Claim 1, wherein the set of semantic rules (44) comprises information associated with relationship limitations of the objects.

5. The system (10) of Claim 1, wherein the set of semantic rules (44) comprises information associated with relationship options for the objects.

6. The system (10) of Claim 1, wherein the set of semantic rules (44) comprises information associated with a type of object.

7. The system (10) of Claim 1, wherein the set of syntax rules (42) comprises information associated with attributes of the plurality of objects.

8. The system (10) of Claim 1, wherein the set of semantic rules (44) comprises information associated with a connection requirement corresponding to at least one object of the computer network XML data model (34).

9. The system (10) of Claim 1, wherein the set of semantic rules (44) comprises information associated with a connection limitation for at least one object of the computer network XML data model (34).

10. The system (10) of Claim 1, wherein the set of semantic rules (44) comprises information associated with a connection option for at least one object of the computer network XML data model (34).
